# EUROPEAN PATENT SPECIFICATION

(11) **EP 2 003 758 B1**
(45) Date of publication and mention of the grant of the patent: **14.03.2012**
(21) Application number: 08010752.7
(22) Date of filing: 12.06.2008
(51) Int. Cl.: H02J 3/26

(54) **Power conversion apparatus and module including the power conversion apparatus**
Stromwandler und Modul mit einem Stromwandler
Appareil de conversion de puissance et module comprenant l'appareil de conversion de puissance

(30) Priority: 15.06.2007 JP 2007158141
(43) Date of publication of application: 17.12.2008
(73) Proprietor: Hitachi Appliances, Inc., Minato-ku Tokyo (JP)
(72) Inventor: Li, Dong Sheng, Tokyo 100-8220 (JP); Notohara, Yasuo, Tokyo 100-8220 (JP); Iwaji, Yoshitaka, Tokyo 100-8220 (JP); Kurita, Yoshiaki, Shizuoka-shi, Shizuoka (JP)
(74) Representative: Kirschner, Klaus Dieter

(56) References cited:
- JP-A- 2002 354 815
- JP-A- 2003 088 141
- US-A- 5 309 349
- US-A- 5 384 696
- US-A- 6 052 297
- US-A1- 2006 044 848
- PILLAY P ET AL: "Definitions of Voltage Unbalance" IEEE POWER ENGINEERING REVIEW, IEEE INC, NEW YORK, US, vol. 21, no. 5, 1 May 2001 (2001-05-01), pages 50-51, XP011092198 ISSN: 0272-1724

## Description

The present invention relates to a power conversion method and a power conversion apparatus.

There has been found the widespread prevalence of a PWM converter apparatus for converting a three-phase AC current to a DC current, and inverter apparatuses for converting a DC current to a three-phase AC current, such as a power-system connection-use power conversion apparatus and an inverter apparatus for driving a three-phase AC motor.

In the apparatuses like this, in some cases, the three-phase AC current becomes unbalanced. These cases are occasions, e.g., when three-phase power source voltage is unbalanced, or when motor structure is not symmetrical due to a variation in its manufacturing.

If the three-phase AC current becomes unbalanced, there occur a lot of serious influences. Examples of these influences are such that the current is concentrated into one phase of the power converter, current distortion or ripple of the DC voltage becomes larger, and ripple torque occurs in the motor. In particular, the smaller the converter's reactor or inductance value of a motor's wound wire becomes, the larger the current unbalance becomes.

Conventionally, in order to exert the balanced control over the three-phase AC current, as disclosed in, e.g., JP-A-2003-88141 and JP-A-2002-354815, the following method has been proposed: The three-phase power-source voltage is detected, then calculating the unbalance amount in the power-source voltage. Next, a compensation amount is added to the three-phase voltage command for the converter circuit.

According to the scheme disclosed in the above-described Patent documents, however, high accuracy three-phase power-source voltage sensors are necessary. Also, the voltage signal processing is indispensable to the controller.

The use of the large number of voltage sensors brings about a rise in the cost. In addition, there occurs a danger that the control performance will be lowered due to sensor error and power-source noises. Also, the increase in the number of the components results in a lowering in reliability of the apparatus.

Moreover, in the above-described conventional technology, a large number of A/D converters and signal computation processings are necessary when a microcomputer is used in the controller. This drawback restricts the use of a low-cost microcomputer.
Also, in the case of the inverter apparatus for driving the three-phase AC motor, it is difficult to detect the motor back-emf directly. This difficulty makes the application of the above-described method difficult.

According to US-A-6 052 297 a power conversion apparatus includes a current component control section which outputs q axis and d axis negative-sequence components and q axis and d axis positive-sequence components based on a detected current value or a voltage value, a current component control which compares a current component with the current instruction value from an instruction value generator and outputs to an adder/subtracter the result, a converter converting a control signal output from the adder/subtractor into three-phase components, and an adder adding these three-phase components to respective phases and outputting the result to a power conversion section

The converter of US 20006/044848 includes a converter circuit having a plurality of bridge-connected semiconductor switching devices for converting AC power into DC power, a smoothing condenser connected in parallel to the DC side of the converter circuit and a current detector provided in a condenser circuit to control a condenser current flowing through the smoothing condenser to be a set value. The condenser current is controlled to be the set value (e.g. zero) to thereby reduce the capacity of the smoothing condenser and make the converter small.

US-A-5 309 349 refers to a current detection method for a direct-current (DC) to three-phase alternating-current (AC) converter can utilize only a single DC sensor to detect and calculate the three-phase alternating currents. The method can detect a direct current value of one phase at each of six different gate states of three pairs of transistors in the DC to three-phase AC converter by means of the DC sensor. In the two-level pulse width modulation control, the control signal includes a plurality of carrier periods each being subdivided into three intervals. The three pairs of transistors are switched to the zero state in one interval of each carrier period, and to two different gate states respectively in the two other intervals.; The method can detect two current values of different phases respectively in the two other intervals of each carrier period, and then calculate the current value of the other phase in accordance with the principle that the sum of the three-phase currents is always equal to zero.

According to PILLAY P ET AL: "Definitions of Voltage Unbalance" IEEE POWER ENGINEERING REVIEW, IEEE INC, NEW YORK, US, vol. 21, no. 5,1 May 2001 (2001-05-01). pages 50-51, XP0110921981SSN: 0272-1724 the PVUR is calculated using the maximum deviation of a phase voltage magnitude from the average of all phase voltage magnitudes which yields a quantity representing the unbalance in an individual phase The document also points out, that the approximation formula simplifies the calculation and provides a good approximation of the true unbalance calculated from the negative sequence component for a low value of the unbalance.

In US-A-5 384 696 an active power line conditioner is disclosed. A series inverter is controlled by a series filter controller which performs synchronous transformations on a load current to generate a series filter feedforward signal corresponding to the fundamental components of the load current. The series filter controller also generates a series filter reference signal corresponding to a negative sequence fundamental output voltage. The series filter feedforward signal and the series filter reference signal are combined to form a series filter compensation signal. The series filter compensation signal is applied to the series inverter to generate sinusoidal input currents, with negative sequence fundamental output voltage compensation, for a non-linear load.; A parallel inverter is controlled by a parallel filter controller which performs synchronous transformations to generate a parallel filter feedforward signal corresponding to the harmonic ripple components of the load current. The parallel filter controller also generates a parallel filter reference signal corresponding to a negative sequence fundamental source current. The parallel filter feedforward signal and the parallel filter reference signal are combined to form a parallel filter compensation signal. The parallel filter compensation signal is applied to the parallel inverter to generate sinusoidal voltages, with source current negative sequence fundamental compensation, for the non-linear load.

It is an object of the present invention to implement a power converter or a module which makes it possible to exert the balanced control over AC current by extracting unbalanced current components out of the AC current signals and adjusting the output voltage of the power converter, without detecting the power-source voltage or motor back-emf (electro motive force).

This object is achieved by a power conversion method according to claim 1 and a power conversion apparatus according to claim 7. Preferred embodiments of the invention are characterized in the sub-claims.

In the power conversion apparatus, the unbalanced current components are extracted out of the AC current flowing into the power conversion apparatus, or the AC current outputted from the power conversion apparatus. Moreover, based on the unbalanced current components, the AC voltage of the power conversion apparatus is adjusted so that the unbalanced current components of the AC current will be suppressed.

It is possible to implement the power converter or the module which makes it possible to exert the balanced control over the AC current by extracting the unbalanced current components out of the AC current signals and adjusting the output voltage of the power converter, without detecting the power-source voltage or motor back-emf.

Embodiments of the invention are now described with reference to the drawings.
Fig. 1 is a configuration diagram of a converter apparatus showing a first embodiment of the present invention;
Fig. 2 is a converter control block diagram of the first embodiment of the present invention;
Fig. 3 is an explanatory diagram for explaining an unbalanced-current-component calculation method 1 of the first embodiment of the present invention;
Fig. 4 is an explanatory diagram for explaining an unbalanced-current-component calculation method 2 of the present invention;
Fig. 5 is an explanatory diagram for explaining an unbalanced-current-component calculation method 3 of the present invention;
Fig. 6 is an explanatory diagram for explaining a balanced-control-gain calculation method of the present invention;
Fig. 7 is an explanatory diagram for explaining a compensation method for the command voltage of the present invention;
Fig. 8 illustrates voltage/current waveforms of an example showing effects of the present invention;
Fig. 9 is a configuration diagram of an inverter apparatus showing a second embodiment of the present invention;
Fig. 10 is an inverter control block diagram of the second embodiment of the present invention;
Fig. 11 is an explanatory diagram for explaining the balanced-control-gain calculation method of the present invention;
Fig. 12 is a configuration diagram of the inverter apparatus showing a third embodiment of the present invention;
Fig. 13 is a configuration diagram of a module showing a fourth embodiment of the present invention;
Fig. 14 is a configuration diagram of a converter-inverter apparatus showing a fifth embodiment of the present invention; and
Fig. 15 is a configuration diagram of a converter-inverter module showing the fifth embodiment of the present invention.

### DESCRIPTION OF THE EMBODIMENTS

Hereinafter, the explanation will be given below concerning embodiments in accordance with the drawings.

### [1st Embodiment]

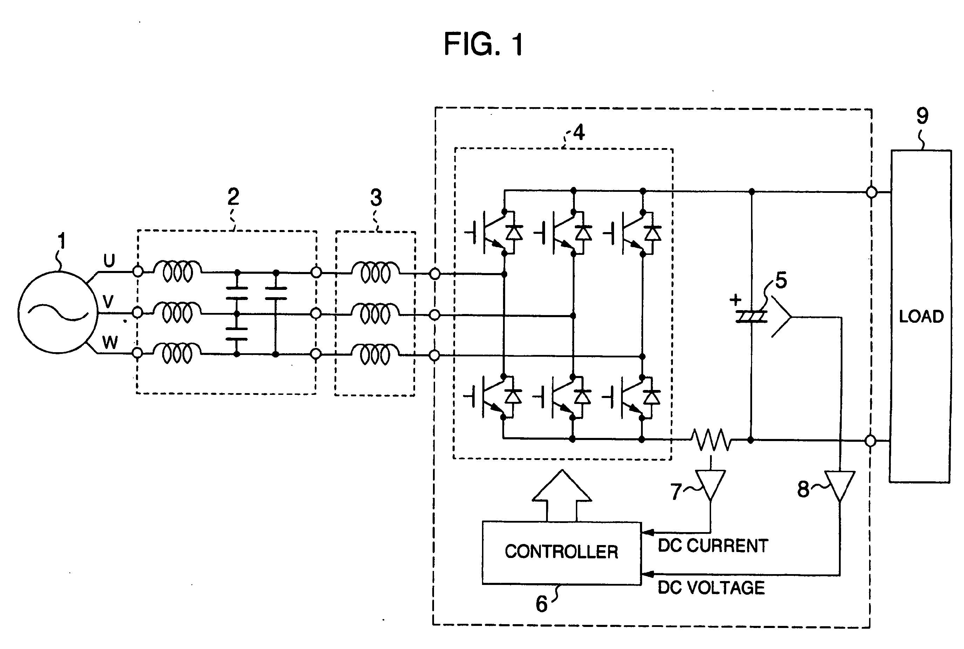

Fig. 1 illustrates a configuration diagram of a converter apparatus for converting a three-phase AC current to a DC current, which is a first embodiment of the present invention.

As just illustrated in Fig. 1, the converter apparatus includes a converter circuit 4 which is connected to a three-phase AC power-source 1 via a ripple filter 2 and a reactor 3, a smoothing capacitor 5 which is connected to a DC output terminal of the converter circuit 4, a controller 6 for controlling the converter circuit 4, a shunt-resistance & DC-bus-current detector 7 which is connected between the smoothing capacitor 5 and the converter circuit 4 for detecting the DC bus current, and a DC voltage detector 8. Incidentally, a semiconductor computation device such as microcomputer or DSP (Digital Signal Processor) is used as the controller 6.

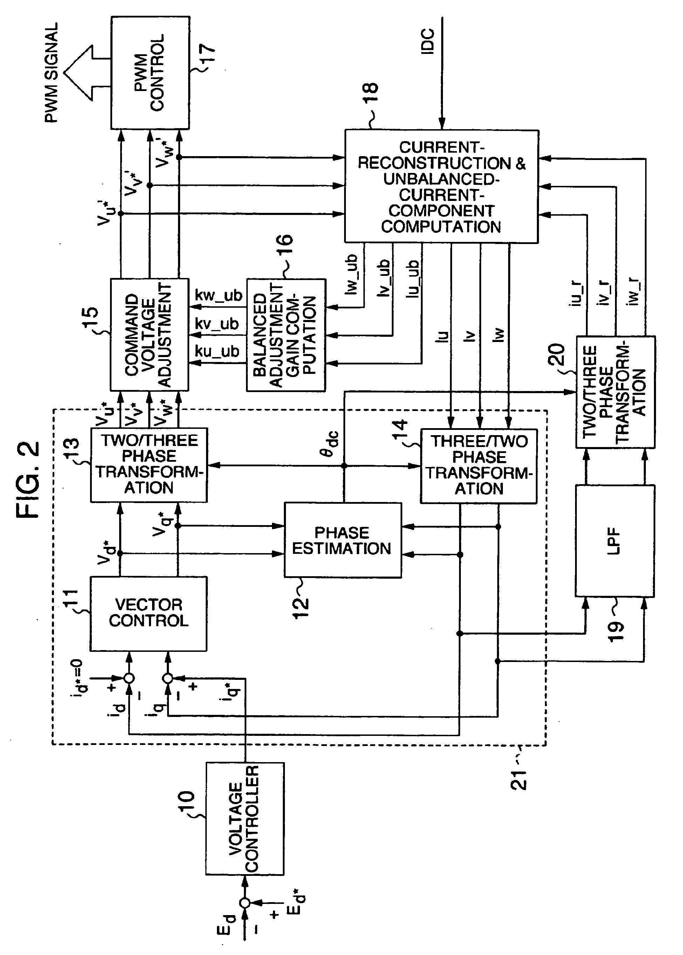

Fig. 2 illustrates a configuration diagram regarding the converter control inside the controller 6 in the converter apparatus.

Using a voltage controller 10, a q-axis current command value (iq*) is created from a deviation between a voltage signal (Ed) from the DC voltage detector 8 and a DC voltage command value (Ed*). Also, a d-axis current command value (id*) is set at zero in order to minimize an inactive current component of the input current.

A current-reconstruction & unbalanced-current-component computation device 18 performs reconstruction of three-phase AC current (Iu, Iv, Iw) and a calculation processing of unbalanced current components (Iu_ub, Iv_ub, Iw_ub), using a detection signal (IDC) of the DC bus current from the shunt-resistance & DC-bus-current detector 7 and an output command voltage signal (Vu*', Vv*', Vw*'). The concrete computation method will be described later.

A command-voltage computation processing 21 transforms the reconstructed three-phase AC current (Iu, Iv, Iw) to values (id, iq) on d/q-axes coordinates by using a three/two transformer 14. Next, the processing 21 determines deviations between the values (id, iq) and their respective command values (id*, iq*), thereby calculating command voltages (Vd*, vq*) on the d/q axes via a vector controller 11.

Three-phase AC command voltages (Vu*, Vv*, Vw*) are calculated by a two/three transformer 13, using the calculated command voltages (Vd*, Vq*) on the d/q axes and phase information (θdc) from a phase estimator 12.

The processing inside the above-described phase estimator 12 is performed using the AC power-source sensor-less method disclosed in JP-A-2006-67754. Accordingly, the detailed explanation thereof will be omitted here.

Hereinafter, the explanation will be given below concerning the computation method of the three-phase AC unbalanced current components (Iu_ub, Iv_ub, Iw_ub).

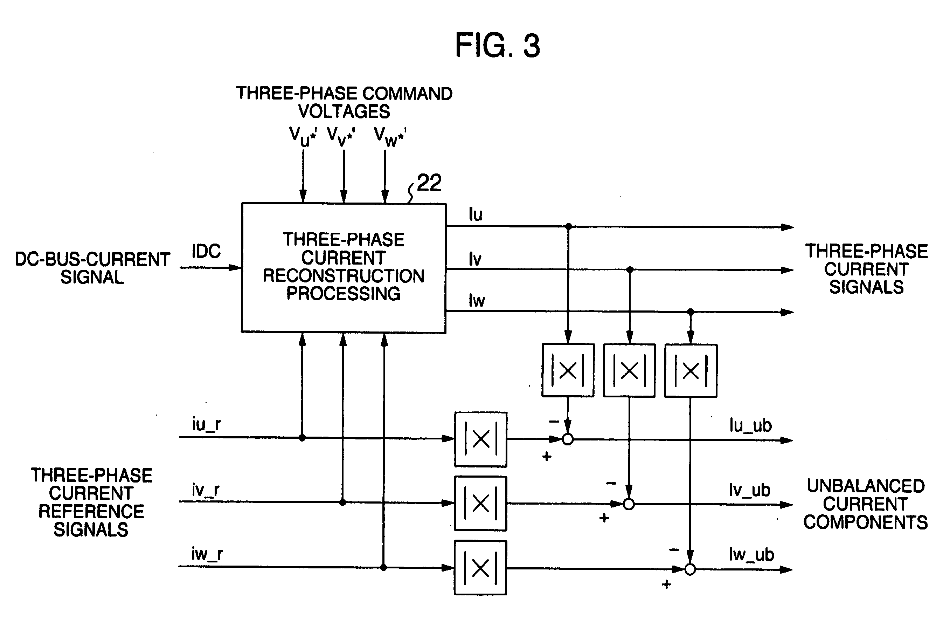

Method 1: As illustrated in Fig. 2, first, using a low-pass filter 19, a ripple component and an AC component are eliminated from the d/q-axes current amount values (id, iq), i.e., the outputs of the three/two transformer 14. Next, the remaining DC component is inversely transformed using a two/three transformer 20, thereby calculating balance reference values (iu_r, iv_r, iw_r) of the three-phase AC current. Moreover, in the current-reconstruction & unbalanced-current-component computation device 18, as illustrated in Fig. 3, differences are determined between absolute values of respective phases of the three-phase AC current (Iu, Iv, Iw) and absolute values of the respective balance reference values (iu_r, iv_r, iw_r), thereby extracting the unbalanced current components (Iu_ub, Iv_ub, Iw_ub).

Making the computation just as described above makes it possible to extract the unbalanced current components (Iu_ub, Iv_ub, Iw_ub) from the d/q-axes current amount values (id, iq), i.e., the outputs of the three/two transformer 14.

Here, the other two schemes for extracting the unbalanced current components (Iu_ub, Iv_ub, Iw_ub) from the respective-phase three-phase AC current (Iu, Iv, Iw) will be described below. The two schemes described below are schemes for extracting the unbalanced current components (Iu_ub, Iv_ub, Iw_ub) from the respective-phase three-phase AC current (Iu, Iv, Iw) without performing the transformation to the rotation coordinate system.

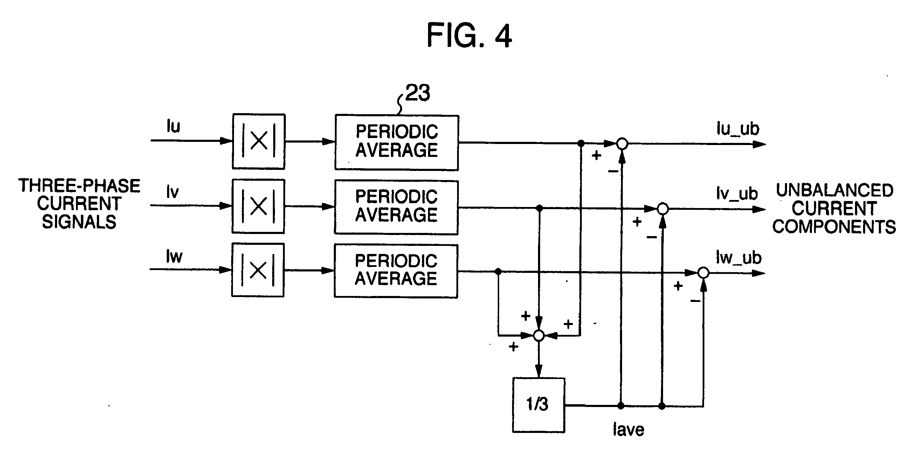

Method 2: As illustrated in Fig. 4, integral values or accumulation values of the absolute values of the respective-phase three-phase AC current (Iu, Iv, Iw) are calculated during n/2 (n: 1, 2, ...) period of the AC power-source voltage. Next, average value Iave of the three-phase AC current is computed from the respective integral values or accumulation values. Moreover, differences between the respective-phase integral values or accumulation values and the average value Iave of the three-phase AC current are determined as being the unbalanced current components (Iu_ub, Iv_ub, Iw_ub).

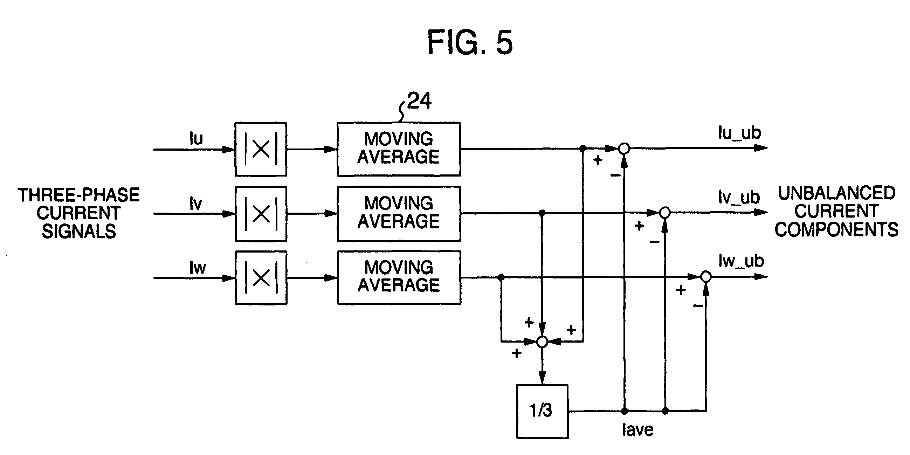

Method 3: As illustrated in Fig. 5, moving average values (lengths of the moving averages are assumed to be the n/2 (n: 1, 2, ...) period of the AC power-source voltage) of the absolute values of the respective-phase three-phase AC current (Iu, Iv, Iw) are calculated. Next, average value Iave of the three-phase AC current is computed from the respective-phase moving average values. Moreover, differences between the respective-phase moving average values and the average value Iave are determined as being the unbalanced current components (Iu_ub, Iv_ub, Iw_ub).

In the first embodiment, the explanation has been given employing the scheme illustrated in Fig. 3 as its basic scheme. The use of the schemes illustrated in Fig. 4 and Fig. 5, however, also allows implementation of the extraction of the unbalanced current components. In particular, when using a semiconductor computation device with a low computational capability, the schemes illustrated in Fig. 4 and Fig. 5 are especially effective.

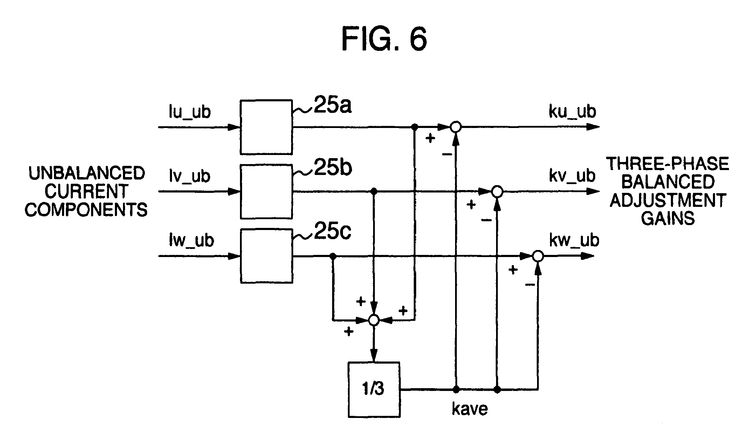

Fig. 6 illustrates a calculation method of three-phase balanced adjustment gains (ku_ub, kv_ub, kw_ub). Using three proportional-integral controllers or integral controllers 25a, 25b, and 25c, respective-phase compensation amounts are calculated from the unbalanced current components (Iu_ub, Iv_ub, Iw_ub) calculated by the above-described method. Also, average value kave of the respective-phase compensation amounts is calculated so that total of the respective-phase compensation amounts becomes equal to zero. Moreover, differences between the respective-phase compensation amounts and the average value kave of the respective-phase compensation amounts are determined, then outputting the differences as the three-phase balanced adjustment gains (ku_ub, kv_ub, kw_ub).

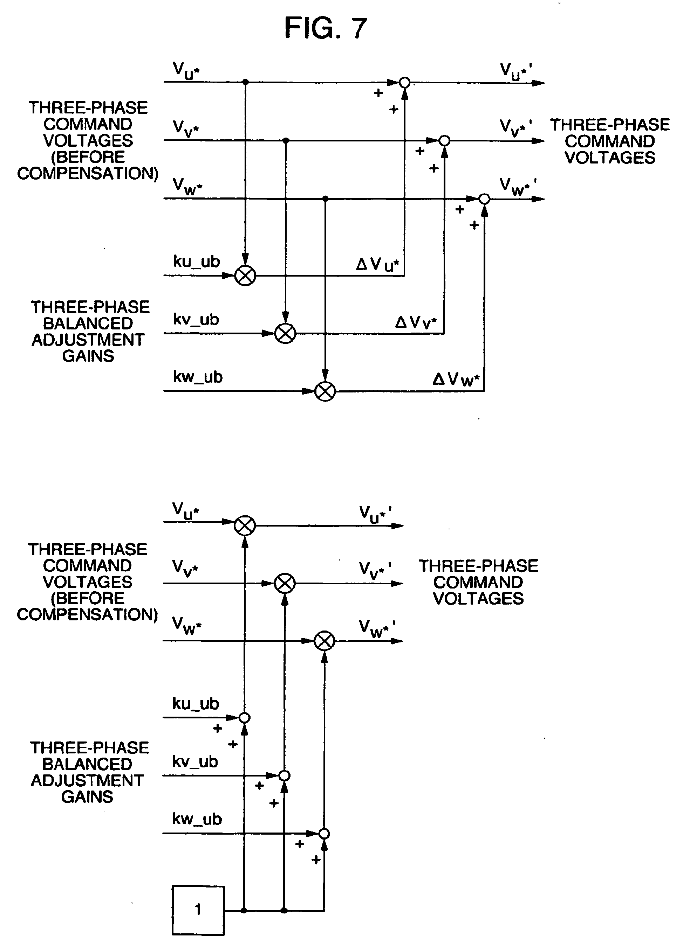

Fig. 7 illustrates two methods for compensating the three-phase AC command voltages (Vu*, Vv*, Vw*) by using the three-phase balanced adjustment gains (ku_ub, kv_ub, kw_ub).

Compensation amount values (ΔVu*, ΔVv*, ΔVw*) are calculated by multiplying the three-phase AC command voltages (before compensation: Vu*, Vv*, Vw*) by the above-described three-phase balanced adjustment gains (ku_ub, kv_ub, kw_ub). Here, the three-phase AC command voltages are obtained by inversely transforming the command voltage amount values (Vd*, Vq*) on the d/q axes to the three phases. Next, the compensation amount values (ΔVu*, ΔVv*, ΔVw*) are added to the three-phase AC command voltages (before compensation: Vu*, Vv*, Vw*), thereby calculating compensated three-phase AC command voltages (Vu*' , Vv*', Vw*').

Also, as another method, 1 is added to the above-described three-phase balanced adjustment gains (ku_ub, kv_ub, kw_ub). After that, resultant values obtained by this addition are multiplied by the three-phase AC command voltages (before compensation: Vu*, Vv*, Vw*), thereby calculating the compensated three-phase AC command voltages (Vu*', Vv*', Vw*').

Here, either use of the above-described two methods results in acquisition of the one and same consequence. Incidentally, although, in the right drawing in Fig. 7, 1 is added to the three-phase balanced adjustment gains (ku_ub, kv_ub, kw_ub), a predetermined value such as 1 may be subtracted therefrom or added thereto. This is because it is satisfying enough that the three-phase balanced adjustment gains (ku_ub, kv_ub, kw_ub) be reflected on the three-phase AC command voltages.

Finally, as illustrated in Fig. 2, the compensated three-phase AC command voltages (Vu*', Vv*', Vw*') are inputted into a PWM controller 17, thereby outputting a PWM signal.

Here, using a concrete example, the explanation will be given below concerning operation of a current balanced control loop (refer to Fig. 2, Fig. 6, and Fig. 7).

For example, when the u-phase current (Iu) is smaller than the other-phase currents, the u-phase unbalanced current component (Iu_ub) becomes a negative value. As illustrated in Fig. 6, the u-phase unbalanced current component (Iu_ub) is processed by the proportional-integral controller or integral controller, thereby obtaining a negative u-phase balanced adjustment gain (ku_ub). Next, as illustrated in Fig. 7, a negative compensation amount value (ΔVu*) is added to the u-phase AC command voltage (before compensation: Vu*). This addition lowers the resultant u-phase voltage (Vu*') outputted from the converter. As a result, the difference between the u-phase power-source voltage and the u-phase voltage of the converter becomes larger. Consequently, the u-phase current becomes larger.

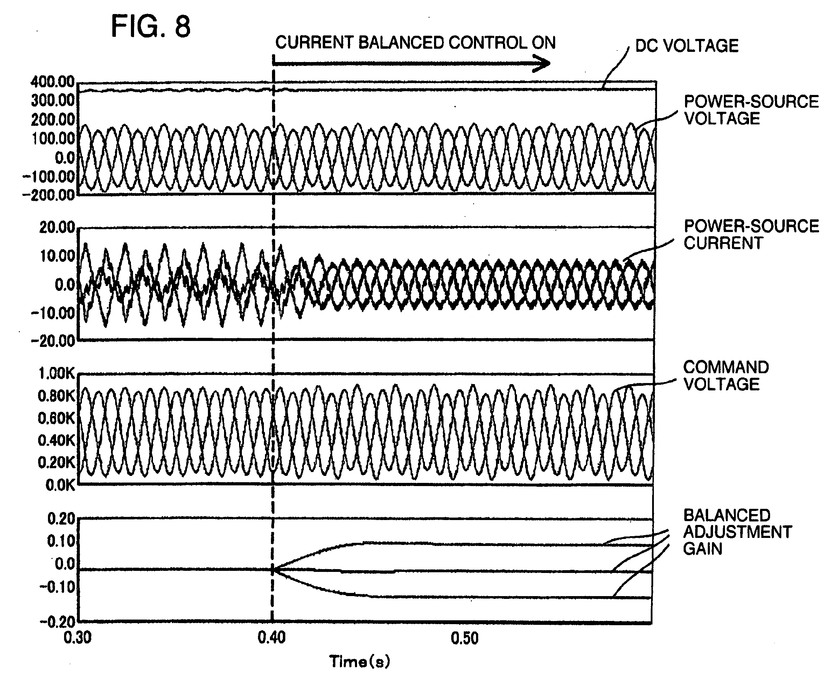

Fig. 8 illustrates a simulation result at the time when the three-phase power-source voltage is unbalanced. When the current balanced control is switched OFF (0.3 ~ 0.4 [s]), the three-phase AC current becomes unbalanced, and thus the current amplitude corresponding to one phase is large. Meanwhile, when the current balanced control is switched ON (0.4 [s] ~), the current waveforms become sinusoidal waves where the three-phase AC current is balanced. Simultaneously, the ripple component of the DC voltage becomes smaller.

In the present embodiment, the DC bus current is detected by using the shunt resistance. Not being limited to the shunt resistance, however, a current sensor or the like may also be used actually. As a matter of course, it is all right to directly detect the three-phase AC current by using the current sensor instead of the DC bus current.

In the present embodiment, the explanation has been given concerning the application of the three-phase AC power-source. Basically the same method, however, is also applicable in the case of a multi-phase power-source.

### [2nd Embodiment]

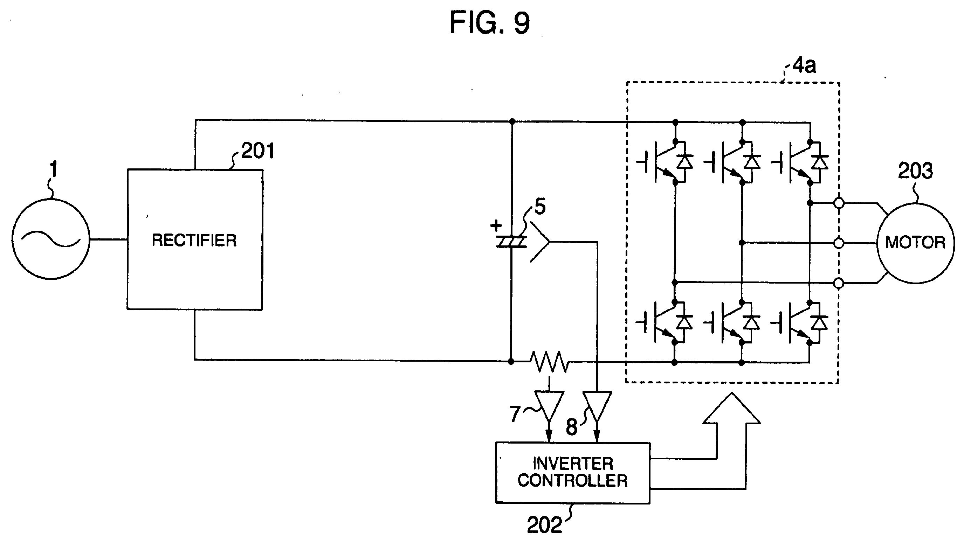

Fig. 9 illustrates configuration of a motor-driving inverter system, which is a second embodiment of the present invention.

The same reference numerals as the ones in Fig. 1 of the first embodiment perform the same operations. Configuration parts which differ from the ones in Fig. 1 are a rectifier 201 for converting an AC current to a DC current, and an inverter controller 202, and a motor 203.

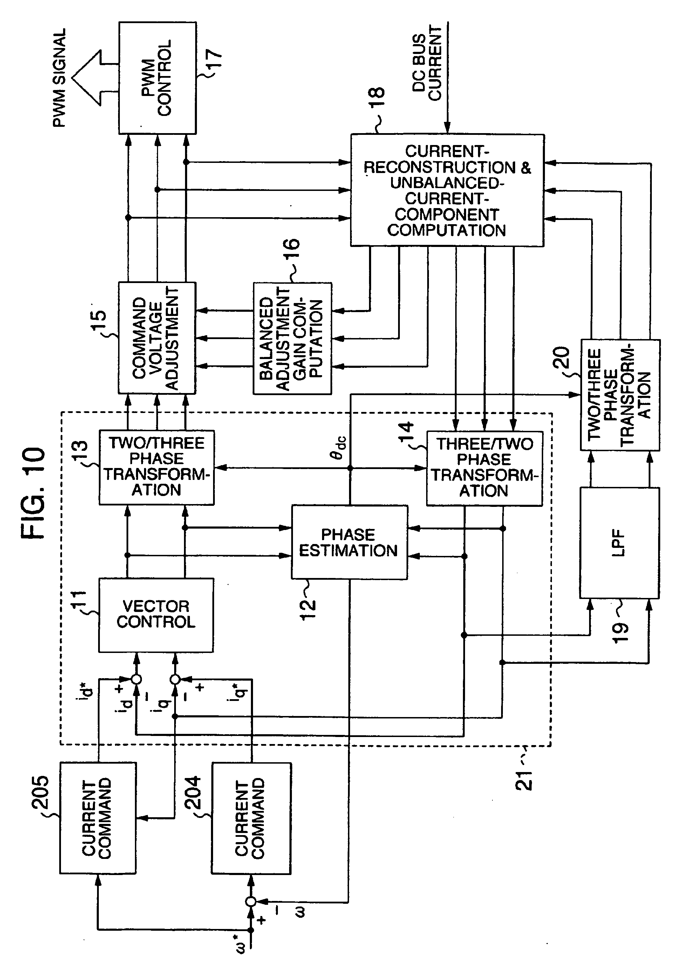

Fig. 10 illustrates control configuration inside the inverter controller 202.

The same reference numerals as the ones in Fig. 2 of the first embodiment perform the same operations. Configuration parts which differ from the ones in Fig. 2 are a q-axis current command generator 204 and a d-axis current command generator 205.

The q-axis current command generator 204 and the d-axis current command generator 205 generate the d/q-axes current command values (id* and iq*) in accordance with a speed command value ω* supplied from the outside.

The operations hereinafter are basically the same as the ones in the first embodiment. Accordingly, the explanation thereof will be omitted here.

Here, the explanation will be given below concerning compensation amount values in the inverter system.

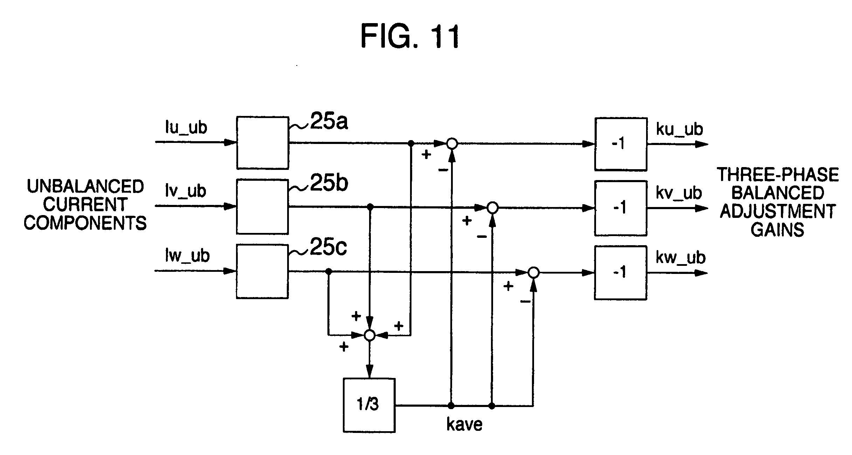

As was exactly described in the first embodiment, the three-phase AC command voltages will be adjusted using the compensation amount values for the three-phase AC command voltages. In the adjustment of the three-phase AC command voltages in the inverter system, however, the adjustment is made reverse to the case of the three-phase converter in the first embodiment. As its concrete method, as illustrated in Fig. 11, negative signs are given to the three-phase balanced control gains (ku_ub, kv_ub, kw_ub).

For example, when the u-phase current (Iu) is smaller than the other-phase currents, the u-phase unbalanced current component (Iu_ub) becomes a negative value. The u-phase unbalanced current component (Iu_ub) is processed by the proportional-integral controller or integral controller to give the negative sign to the u-phase unbalanced current component (Iu_ub). This process eventually obtains a positive u-phase balanced adjustment gain (ku_ub).

Finally, a positive compensation amount value (ΔVu*) is added to the u-phase AC command voltage (before compensation: Vu*). This addition raises the resultant u-phase voltage (Vu*') outputted from the inverter. As a result, the u-phase current becomes larger.

Here, when the inverter system in the present embodiment is in power re-generation operation, the above-described negative-sign processing becomes unnecessary (basically the same processing as in the first embodiment).

If, as the power conversion direction, both of the power conversion directions are necessary, the positive-or-negative adjustment of the balanced control gains is needed to be automatically changed depending on the power conversion directions. As one method, the positive-or-negative sign of the balanced control gains is determined in accordance with the power conversion directions or positive-or-negative sign of the active current command (iq*).

As was just described in the first embodiment, in the present embodiment as well, the DC bus current is detected by using the shunt resistance. Not being limited to the shunt resistance, however, a current sensor or the like may also be used actually. As a matter of course, it is all right to directly detect the three-phase AC current by using the current sensor instead of the DC bus current.

According to the above-described control method, it becomes possible to exert the balanced control over the outputted AC current in the motor-driving inverter apparatus of inexpensive circuit configuration without taking advantage of the AC voltage sensor.

### [3rd Embodiment]

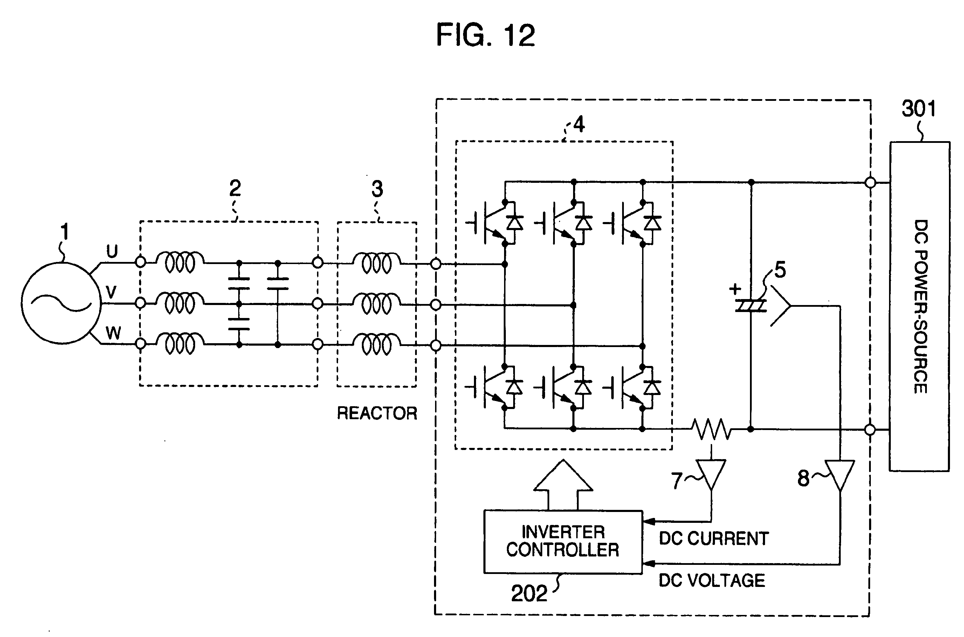

Next, referring to Fig. 12, the explanation will be given below concerning a third embodiment of the present invention.

In the configuration in Fig. 12, the same reference numerals as the ones in Fig. 1 of the first embodiment and the ones in Fig. 9 of the second embodiment perform the same operations.

This embodiment shows an example of the utilization mode of the conversion from a DC power-source 301 (such as battery, solar cell, and fuel cell) to the AC power-source of the inverter apparatus in the second embodiment of the present invention. In other words, the present embodiment is a case where the power conversion direction in the first embodiment becomes opposite thereto.

The calculation method for each balanced adjustment gain and the compensation method for the outputted commands are the same as the ones in the second embodiment.

Similarly, if, as the power conversion direction in the present embodiment, both of the power conversion directions are necessary (e.g., in the case of UPS power-source apparatus), the positive-or-negative adjustment of the balanced control gains is needed to be automatically changed depending on the power conversion directions.

### [4th Embodiment]

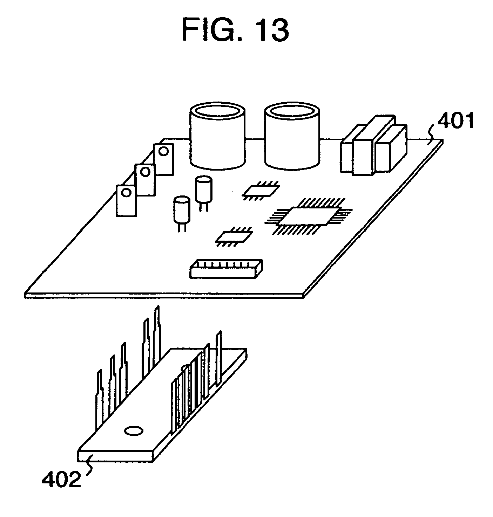

Fig. 13 illustrates, as an example of the final modes of products of the present invention, module implementation of the three-phase converter apparatus in the first embodiment, or the motor-driving inverter apparatus in the second embodiment, or the power-system connection-use inverter apparatus in the third embodiment.

The module implementation is achieved by arranging the power-source of the control circuit, the control microcomputer, the detection circuit, and a semiconductor device (power module) 402 on a controller board 401. This achievement of the module implementation allows small-sized implementation of the apparatus as well as a reduction in the apparatus cost. The power module 402 is inserted into a socket located on the board 401.

Taking advantage of the present invention makes it possible to exert the balanced control over the AC current even if the AC voltage sensor is absent on the AC side of the module, thereby allowing small-sized implementation of the module and an enhancement in its control performance. Also, the currents dealt with in each switching device become substantially equal to each other. This feature allows an improvement in reliability and efficiency of the apparatus.

### [5th Embodiment]

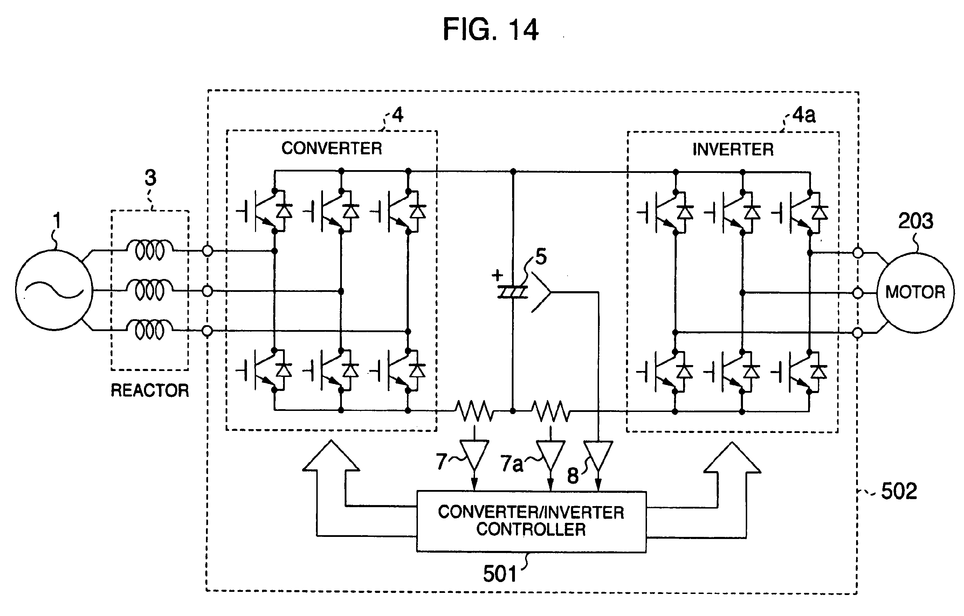

Fig. 14 illustrates, as an example of the final modes of products of the present invention, one-module implementation of the three-phase converter apparatus in the first embodiment and the motor-driving inverter apparatus in the second embodiment.

Here, the DC-bus-current detector 7, an inverter-DC-current detection circuit 7a, the DC voltage detector 8, a converter/inverter controller 501, the converter circuit 4, and an inverter circuit 4a are configured on the same board, thus having a mode of being contained into one module.

The module implementation allows a reduction in the shared configuration parts in the controller (e.g., co-use of the control microcomputer, power-source circuit, and DC voltage detection circuit). Also, the sharing of control information by the converter and the inverter makes it possible to speed up the control response.

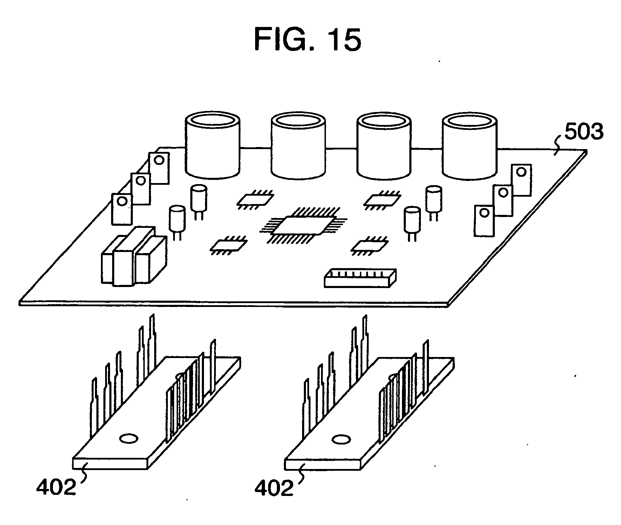

Fig. 15 illustrates a mode of the module.

What is referred to as "module" here means "normalized configuration unit". The normalized configuration unit is a unit configured with separable hardware/software configuration parts. Incidentally, although, preferably, the module is configured on the same board from the standpoint of its fabrication, the module is not limited thereto. On account of this, the module may also be configured on a plurality of circuit boards built in the same housing.

According to the present invention, it becomes possible to exert the balanced control over the inputted/outputted AC current in the PWM converter apparatus and the motor-driving inverter apparatus of inexpensive circuit configuration without taking advantage of the AC voltage sensor and AC current sensor completely. This feature allows small-sized implementation of the module and an enhancement in its control performance. Also, the currents dealt with in each switching device are substantially equal to each other. This feature allows an improvement in reliability and efficiency of the apparatus.

Also, as an application, it is allowable to apply the present invention to only either of the converter apparatus and the inverter apparatus.

As having been described so far, the present invention allows implementation of the power converter or the module which makes it possible to exert the balanced control over the AC current by extracting the unbalanced current components out of the AC current signals and adjusting the output voltage of the power converter, without detecting the power-source voltage or motor back-emf.

## Claims

1. A power conversion method for converting an AC current to a DC current, or converting said DC current to said AC current, wherein
unbalanced current components are extracted out of said AC current flowing into said power conversion apparatus, or said AC current outputted from said power conversion apparatus, and, based on said unbalanced current components,
AC voltage of said power conversion apparatus is adjusted so that said unbalanced current components of said AC current is suppressed,
balanced adjustment gains for compensating for said AC voltage of said power conversion apparatus are calculated from said unbalanced current components, and wherein
said AC voltage of said power conversion apparatus being then adjusted using said balanced adjustment gains **characterized in that**
said balanced adjustment gains are determined as differences between compensation amounts and average value of said compensation amounts, said compensation amounts being calculated from said unbalanced current components by using proportional-integral controllers or integral controllers (25a, 25b, and 25c), wherein
DC-current components of said AC current are extracted by transforming said AC current to a rotation coordinate system,
balance reference values of said AC current being created by inversely transforming said DC-current components again, and
said unbalanced current components being determined as differences between absolute values of said AC current in said respective phases and absolute values of said balance reference values.

2. The power conversion method according to Claim 1, wherein
said AC current are estimated from a DC bus current.

3. The power conversion method according to Claim 1, wherein
said AC current is transformed into d/q-axes coordinates,
DC-current components of resultant d/q-axes component amounts being extracted using a low-pass filter (19),
balance reference values of said AC current being created by inversely transforming said DC-current components again, and
said unbalanced current components being determined as differences between absolute values of said AC current in said respective phases and absolute values of said balance reference values.

4. The power conversion method according to Claim 1, wherein
said balanced adjustment gains are adjusted into a positive or negative sign in accordance with said power conversion direction or current direction in said power conversion apparatus.

5. The power conversion method according to Claim 1, wherein
unbalance compensation amounts for AC command voltages are calculated by multiplying said AC command voltages of said power conversion apparatus by said balanced adjustment gains,
said unbalance compensation amounts being then added to or subtracted from said AC command voltages in said respective phases.

6. The power conversion method according to Claim 1, wherein
a predetermined value such as 1 is added to or subtracted from said balanced adjustment gains, and after that,
resultant added or subtracted values are multiplied by said AC command voltage in said respective phases of said power conversion apparatus.

7. A power conversion apparatus for converting an AC current to a DC current, or converting said DC current to said AC current, wherein the apparatus comprises means configured to carry out the method of any of the claims 1 to 6.

8. The apparatus of claim 7, further comprising:
a converter circuit (4) for converting AC current to a DC current, input side of said converter circuit (4) being connected to an AC power-source (1) via a reactor (3), a smoothing capacitor (5) being connected to between DC terminals on output side of said converter circuit (4);
an inverter circuit (4a) for converting said DC current to said AC current, output side of said inverter circuit (4a) being connected to a motor (203); a current detection circuit (7) for detecting said inputted AC current into said converter circuit (4) or a DC bus current on said DC side;
a current detection circuit (7a) for detecting said outputted AC current from said inverter circuit (4a) or said DC bus current on said DC side; and
a controller (501) for controlling said converter circuit (4) and said inverter circuit (4a) by using current detection values of said current detection circuits (7, 7a), wherein
unbalanced current components are extracted out of said inputted AC current into said converter circuit (4), AC voltage of said converter circuit (4) being then adjusted from said unbalanced current components so that said unbalanced current components of said AC current is suppressed,
unbalanced current components being extracted out of said outputted AC current from said inverter circuit (4a), AC voltage of said inverter circuit (4a) being then adjusted from said unbalanced current components so that said unbalanced current components of said AC current is suppressed.

## Patentansprüche

1. Stromwandlungsverfahren zum Umwandeln eines Wechselstroms in einen Gleichstrom oder zum Umwandeln eines Gleichstroms in einen Wechselstrom, wobei
unausgeglichene Stromkomponenten von dem Wechselstrom, der in den Stromwandler fließt, oder von dem Wechselstrom, der von dem Stromwandler ausgegeben wird, extrahiert werden, und wobei auf der Basis der unausgeglichenen Stromkomponenten die Wechselspannung des Stromwandlers so eingestellt wird, dass die unausgeglichenen Stromkomponenten des Wechselstroms unterdrückt werden,
Ausgleichsverstärkungen zum Kompensieren der Wechselspannung des Stromwandlers aus den unausgeglichenen Stromkomponenten berechnet werden, und wobei die Wechselspannung des Stromwandlers sodann unter Verwendung der balancierten Ausgleichsverstärkungen nachgestellt wird, **dadurch gekennzeichnet, dass**
die Ausgleichsverstärkungen als Differenzen zwischen Kompensationswerten und Mittelwerten der Kompensationswerte bestimmt werden, wobei die Kompensationswerte aus den unausgeglichenen Stromkomponenten unter Verwendung von Proportional-Integral-Steuereinrichtungen oder Integral-Steuereinrichtungen (25a, 25b und 25c) berechnet werden, wobei
Gleichstromkomponenten des Wechselstroms **dadurch** extrahiert werden, dass der Wechselstrom in ein Rotations-Koordinatensystem transformiert wird,
dass Ausgleichsreferenzwerte des Wechselstroms **dadurch** erzeugt werden, dass die Gleichstromkomponenten wiederum invers transformiert werden, und dass
die unausgeglichenen Stromkomponenten als Differenzen zwischen den Absolutwerten des Wechselstroms in den entsprechenden Phasen und den Absolutwerten der Ausgleichsreferenzwerte bestimmt werden.

2. Stromwandlungsverfahren nach Anspruch 1, worin
der Wechselstrom aus einem Strom auf dem Gleichstrom-Bus abgeschätzt wird.

3. Stromwandlungsverfahren nach Anspruch 1, worin
der Gleichstrom in d/q-Achsenkoordinaten transformiert wird,
wobei die Gleichstromkomponenten der resultierenden d/q-Achsenkomponentenwerte unter Verwendung eines Tiefpassfilters (19) extrahiert werden,
dass Ausgleichsreferenzwerte des Wechselstroms **dadurch** erzeugt werden, dass die Gleichstromkomponenten wiederum invers transformiert werden, und
wobei die unausgeglichenen Stromkomponenten als Differenzen zwischen den Absolutwerten des Wechselstroms in den entsprechenden Phasen und den Absolutwerten der AusgleichsReferenzwerte bestimmt werden.

4. Stromwandlungsverfahren nach Anspruch 1, worin
die Ausgleichsverstärkungsgrade in ein positives oder negatives Zeichen entsprechend der Stromumwandlungsrichtung oder der Stromrichtung in dem Stromwandler nachgestellt werden.

5. Stromwandlungsverfahren nach Anspruch 1, worin
Unausgeglichenheits-Ausgleichsbeträge für Wechselstrom-Steuerspannungen **dadurch** berechnet werden, dass die Wechselstrom-Steuerspannungen des Stromwandlers mit den Ausgleichsverstärkungsgraden multipliziert werden,
wobei die Unausgeglichenheits-Ausgleichsbeträge sodann zu den Wechselstrom-Steuerspannungen in den entsprechenden Phasen hinzu addiert oder davon subtrahiert werden.

6. Stromwandlungsverfahren nach Anspruch 1, worin
ein vorgegebener Wert, beispielsweise 1, zu den Ausgleichsverstärkungsgraden hinzu addiert oder davon subtrahiert wird, und dass danach
resultierende hinzu addierte oder subtrahierte Werte mit der Wechselstrom-Steuerspannung in den entsprechenden Phasen in dem Stromwandler multipliziert werden.

7. Stromwandler-Einrichtung zum Umwandeln eines Gleichstroms in einen Wechselstrom oder zum Umwandeln eines Gleichstroms in den Wechselstrom, wobei die Einrichtung Mittel umfasst, die ausgestaltet sind, um das Verfahren nach einem der Ansprüche 1 bis 6 auszuführen.

8. Einrichtung nach Anspruch 7, ferner umfassend:
eine Wandler-Schaltung (4) zum Umwandeln eines Wechselstroms in einen Gleichstrom, wobei die Eingangsseite der Wandler-Schaltung (4) mit einer Wechselstromquelle (1) über einen Reaktor (3) verbunden ist, und wobei ein Glättungskondensator (5) zwischen den Gleichstromanschlüssen auf der Ausgangsseite der Wandler-Schaltung (4) angeschlossen ist;
eine Inverter-Schaltung (4a) zum Umwandeln des Gleichstroms in den Wechselstrom, wobei die Ausgangsseite der Wandler-Schaltung (4a) mit einem Motor (203) verbunden ist; eine Stromdetektorschaltung (7) zum Erfassen des eingegebenen Wechselstroms in die Wandler-Schaltung (4) oder eines Gleichstrom-Bus-Stroms auf der Gleichstromseite;
eine Stromdetektorschaltung (7a) zum Erfassen des ausgegebenen Wechselstroms von der Inverter-Schaltung 4a oder des Gleichstrom-Busstroms auf der Gleichstromseite; und
einem Controller (501) zum Steuern der Wandler-Schaltung (4) und der Inverter-Schaltung (4a), in dem die Stromerfassungswerte der Stromdetektorschaltung (7, 7a) verwendet werden, worin
unausgeglichene Stromkomponenten von dem in die Wandler-Schaltung (4) eingegebenen Wechselstrom extrahiert werden, wobei die Wechselspannung der Wandler-Schaltung Wandler-Schaltung (4) sodann von den unausgeglichenen Stromkomponenten eingestellt wird, sodass die unausgeglichenen Stromkomponenten des Wechselstroms unterdrückt werden,
wobei unausgeglichene Stromkomponenten aus dem von der Inverter-Schaltung (4a) ausgegebenen Wechselstrom extrahiert werden, wobei eine Wechselspannung der Inverter-Schaltung (4a) sodann von dem unausgeglichenen Stromkomponenten so eingestellt wird, dass die unausgeglichenen Stromkomponenten des Wechselstroms unterdrückt werden.

## Revendications

1. Procédé de conversion de puissance pour convertir un courant CA dans un courant CC, ou convertir ledit courant CC dans ledit courant CA, où
- les composants de courant déséquilibrés sont extraits dudit courant CA coulant dans ledit appareil de conversion de puissance, ou ledit courant CA sorti dudit appareil de conversion de puissance, et, basé sur lesdits composants de courant déséquilibrés,
- la tension CA dudit appareil de conversion de puissance est ajustée de sorte que lesdits composants de courant déséquilibrés dudit courant CA soient supprimés,
- lesdites amplifications d'ajustement équilibrées pour compenser ladite tension CA dudit appareil de conversion de puissance sont calculées à partir desdits composants de courant déséquilibrés, et où
- ladite tension CA dudit appareil de conversion de puissance étant ensuite ajustée en utilisant lesdites amplifications d'ajustement équilibrées **caractérisé en ce que**
- lesdites amplifications d'ajustement équilibrées sont déterminées comme des différences entre les quantités de compensation et la valeur moyenne desdites quantités de compensation, lesdites quantités de compensation étant calculées desdits composants de courant déséquilibrés en utilisant les contrôleurs proportionnellement-intégraux ou les contrôleurs intégraux (25a, 25b, et 25c), où
- les composants de courant-CC dudit courant CA sont extraits en transformant ledit courant CA à un système de coordonnées de rotation,
- les valeurs de référence d'équilibrage dudit courant CA étant crées en transformant de manière inverse lesdits composants de courant CC de nouveau, et
- lesdits composants de courant déséquilibrés étant déterminés comme les différences entre les valeurs absolues dudit courant CA dans lesdites phases respectives et les valeurs absolues desdites valeurs de référence d'équilibrage.

2. Procédé de conversion de puissance selon la revendication 1, où ledit courant CA est estimé d'un courant de bus CC.

3. Procédé de conversion de puissance selon la revendication 1, où ledit courant CA est transformé dans les coordonnées d'axes d/q, les composants de courant CC des quantités de composants d'axes d/q résultants étant extraits en utilisant un filtre passe-bas (19),
- les valeurs de référence d'équilibrage dudit courant CA étant crées en transformant de manière inverse lesdits composants de courant CC de nouveau, et
- lesdits composants de courant déséquilibrés étant déterminés comme les différences entre les valeurs absolues dudit courant CA dans lesdites phases respectives et les valeurs absolues desdites valeurs de référence d'équilibrage.

4. Procédé de conversion de puissance selon la revendication 1, où lesdites amplifications d'ajustement équilibrées sont ajustées à signe positif ou négatif en conformité avec ledit sens de conversion de puissance ou sens de courant dans ledit appareil de conversion de puissance.

5. Procédé de conversion de puissance selon la revendication 1, où
- les quantités de compensation de déséquilibrage pour les tensions de commande CA sont calculées en multipliant lesdites tensions de commande CA dudit appareil de conversion de puissance par lesdites amplifications d'ajustement équilibrées,
- lesdites quantités de compensation de déséquilibrage étant ensuite ajoutées à ou extraites desdites tensions de commande CA dans lesdites phases respectives.

6. Procédé de conversion de puissance selon la revendication 1, où
- une valeur prédéterminée telle que 1 est ajouté à ou extraite desdites amplifications d'ajustement équilibrées, et après cela,
- les valeurs ajoutées ou extraites résultantes sont multipliées par ladite tension de commande CA dans lesdites phases respectives dudit appareil de conversion de puissance.

7. Appareil de conversion de puissance pour convertir un courant CA dans un courant CC, ou convertir ledit courant CC dans ledit courant CA, où l'appareil comprend le moyen configuré pour réaliser le procédé de l'un quelconque des revendications 1 à 6.

8. Appareil selon la revendication 7, comprenant de plus:
- un circuit convertisseur (4) pour convertir le courant CA dans un courant CC, la partie d'entrée dudit circuit convertisseur (4) étant connectée à une source d'énergie CA (1) par un réacteur (3), un condensateur de filtration (5) étant connecté entre les bornes CC sur la partie de sortie dudit circuit convertisseur (4);
- un circuit inverseur (4a) pour convertir ledit courant CC dans ledit courant CA, la partie de sortie dudit circuit inverseur (4a) étant connecté à un moteur (203); un circuit de détection de courant (7) pour détecter ledit courant CA d'entrée dans ledit circuit convertisseur (4) ou un courant de bus CC sur ladite partie CC;
- un circuit de détection de courant (7a) pour détecter ledit courant CA sorti dudit circuit inverseur (4a) ou ledit courant de bus CC sur ladite partie CC; et
- un contrôleur (501) pour commander ledit circuit de convertisseur (4) et ledit circuit inverseur (4a) en utilisant les valeurs de détection de courant desdits circuits de détection de courant (7, 7a), où
- les composants de courant déséquilibrés sont extraits dudit courant CA d'entrée dans ledit circuit convertisseur (4), la tension CA dudit circuit convertisseur (4) étant ensuite ajustée à partir desdits composants de courant déséquilibrés de sorte que lesdits composants de courant déséquilibrés dudit courant CA soient supprimés,
- les composants de courant déséquilibrés étant extraits dudit courant CA sorti dudit circuit inverseur (4a), la tension CA dudit circuit inverseur (4a) étant ensuite ajustée à partir desdits composants de courant déséquilibrés de sorte que lesdits composants de courant déséquilibrés dudit courant AC soient supprimés.
